# EUROPEAN PATENT APPLICATION

(11) **EP 4 082 933 A1**
(43) Date of publication of application: **02.11.2022**
(21) Application number: 19958022.6
(22) Date of filing: 24.12.2019
(51) Int. Cl.: B65D 65/40, B32B 15/085, B32B 7/06

(54) **PACKAGING CONTAINER AND MANUFACTURING METHOD AND RECYCLING METHOD THEREFOR**

(71) Applicant: Kao Corporation, Chuo-ku Tokyo 103-8210 (JP)
(72) Inventor: INAGAWA, Yoshinori, Tokyo 131-8501 (JP); NONOMURA, Akira, Tokyo 131-8501 (JP); SATO, Masayasu, Tokyo 131-8501 (JP)
(74) Representative: Vossius & Partner Patentanwälte Rechtsanwälte mbB
(86) International application number: PCT/JP2019/050713
(87) International publication number: WO 2021/130872

(57) **Abstract**

The present invention provides a laminated sheet for manufacturing a packaging container. The laminated sheet comprises a pair of plastic sheets, a barrier sheet, a barrier region, an easily peelable region, and a fixing region. The barrier sheet has flexibility and is disposed between the pair of plastic sheets. The barrier region is formed by overlapping the pair of plastic sheets and the barrier sheet with each other. The easily peelable region is provided in the barrier region. The fixing region is located in a circumference of the easily peelable region, in which the pair of plastic sheets are fixed to each other directly and/or via the barrier sheet. A peel strength between the pair of plastic sheets and the barrier sheet in the easily peelable region is smaller than a direct peel strength between the pair of plastic sheets and/or a peel strength between the pair of plastic sheets via the barrier sheet in the fixing region. This improves recyclability of a packaging container having gas barrier property.

## Description

### Field of the Invention

The present invention relates to a recycling technique for a packaging container.

### Background of the Invention

In recent years, the recycling techniques capable of reducing the amount of waste have attracted attention. Patent Literature 1 discloses a recycling technique for a packaging container containing plastic and metal. In this technique, the packaging container is heated to melt the metal and burn the plastic. This makes it possible to recover the metal contained in the packaging container.

### Citation List

### Patent Literature

Patent Literature 1: Japanese Patent Application Laid-Open No. Hei 05-507669

### Disclosure of Invention

### Technical Problem

However, in the recycling technique described above, an environmental load is given due to CO₂ generated by burning of the plastic, and the like. The inventors of the present application have conceived that, in the packaging container containing plastic and metal as described above, separating and recovering not only metal but also plastic to be reusable can further reduce the environmental load.

An object of the present invention relates to a technique for improving recyclability of a packaging container having gas barrier property.

### Solution to Problem

A laminated sheet according to an embodiment of the present invention is used for manufacturing a packaging container.

The laminated sheet comprises a pair of plastic sheets, a barrier sheet, a barrier region, an easily peelable region, and a fixing region.

The barrier sheet has flexibility and is disposed between the pair of plastic sheets.

In the barrier region, the pair of plastic sheets and the barrier sheet overlap with each other.

The easily peelable region is provided in the barrier region.

The fixing region is located in a circumference of the easily peelable region. In the fixing region, the pair of plastic sheets are fixed to each other directly and/or via the barrier sheet.

A peel strength between the pair of plastic sheets and the barrier sheet in the easily peelable region is smaller than a direct peel strength between the pair of plastic sheets and/or a peel strength between the pair of plastic sheets via the barrier sheet in the fixing region.

### Advantageous Effects of Invention

According to the present invention, it is possible to improve recyclability of a packaging container having gas barrier property.

### Brief Description of the Drawings

[Fig. 1] Fig. 1 is a plan view of a packaging container according to an embodiment of the present invention.
[Fig. 2] Fig. 2 is a cross-sectional view of the packaging container taken along the C1-C1' line of Fig. 1.
[Fig. 3] Fig. 3 is an exploded partial cross-sectional view showing a sealing region of the packaging container and its vicinity in an exploded manner.
[Fig. 4] Fig. 4 is an exploded partial cross-sectional view of a modification of the packaging container.
[Fig. 5] Fig. 5 is an exploded cross-sectional view of a modification of the packaging container in an exploded manner.
[Fig. 6] Fig. 6 is a plan view showing a recycling method for the packaging container.
[Fig. 7] Fig. 7 is a cross-sectional view showing the recycling method for the packaging container.
[Fig. 8] Fig. 8 is an exploded partial cross-sectional view showing the recycling method for the packaging container.
[Fig. 9] Fig. 9 is a plan view showing the recycling method for the packaging container.
[Fig. 10] Fig. 10 is a cross-sectional view showing the recycling method for the packaging container.
[Fig. 11] Fig. 11 is a plan view showing the recycling method for the packaging container.
[Fig. 12] Fig. 12 is a cross-sectional view showing the recycling method for the packaging container.
[Fig. 13] Fig. 13 is a plan view of a laminated sheet usable for manufacturing the packaging container.
[Fig. 14] Fig. 14 is a cross-sectional view of the laminated sheet taken along the C2-C2' line of Fig. 13.
[Fig. 15] Fig. 15 is an exploded partial cross-sectional view showing a fixing region of the laminated sheet and its vicinity in an exploded manner.
[Fig. 16] Fig. 16 is an exploded partial cross-sectional view of a modification of the laminated sheet.
[Fig. 17] Fig. 17 is an exploded cross-sectional view of a modification of the laminated sheet in an exploded manner.
[Fig. 18] Fig. 18 is a cross-sectional view of a modification of the laminated sheet.
[Fig. 19] Fig. 19 is a plan view showing a manufacturing process of the packaging container.
[Fig. 20] Fig. 20 is a plan view showing a manufacturing process of the packaging container.
[Fig. 21] Fig. 21 is a plan view showing a manufacturing process of a modification of the packaging container.
[Fig. 22] Fig. 22 is a cross-sectional view of the modification of the packaging container taken along the C3-C3' of Fig. 21.
[Fig. 23] Fig. 23 is a cross-sectional view of a modification of the packaging container.
[Fig. 24] Fig. 24 is an exploded partial cross-sectional view of the modification of the packaging container.
[Fig. 25] Fig. 25 is a cross-sectional view of a modification of the packaging container.
[Fig. 26] Fig. 26 is an exploded partial cross-sectional view of the modification of the packaging container.
[Fig. 27] Fig. 27 is an exploded partial cross-sectional view of a laminated sheet usable for manufacturing the modification of the packaging container.
[Fig. 28] Fig. 28 is a cross-sectional view of a modification of the packaging container.
[Fig. 29] Fig. 29 is an exploded partial cross-sectional view of the modification of the packaging container.
[Fig. 30] Fig. 30 is an exploded partial cross-sectional view of a laminated sheet usable for manufacturing the modification of the packaging container.
[Fig. 31] Fig. 31 is a plan view showing a manufacturing process of the packaging container.

### Detailed Description of the Invention

Hereinafter, embodiments of the present invention will be described with reference to the drawings. Note that, in this specification and drawings, substantially the same components will be denoted by the same reference symbols, and a repetitive description thereof will be omitted. Further, expressions on the vertical and horizontal directions used in this specification represent directions along the plane of each drawing.

### [Configuration of Packaging Container 10]

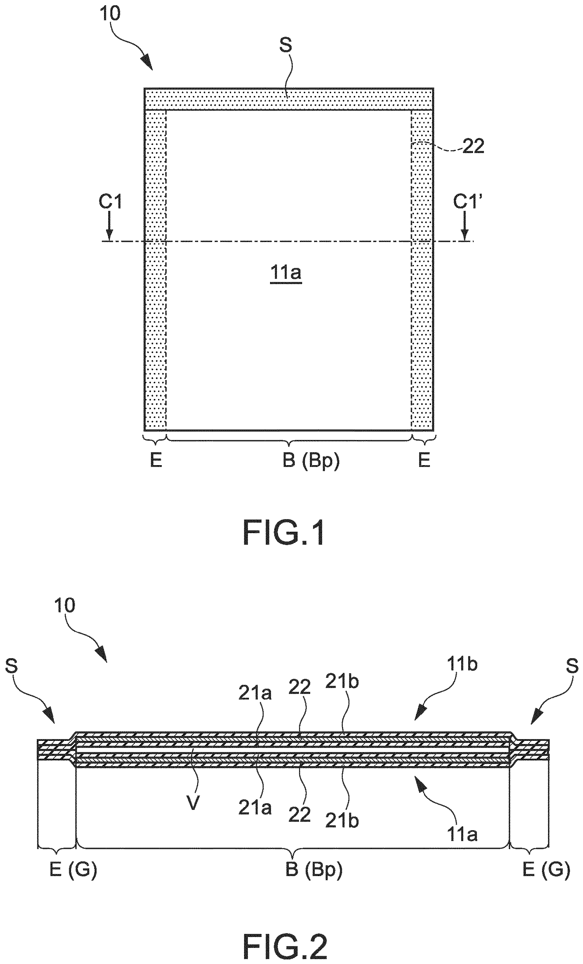

A packaging container 10 according to this embodiment has a planar shape of a rectangle having four sides respectively located in the vertical and horizontal directions as shown in Fig. 1, and includes a first sheet portion 11a and a second sheet portion 11b that face each other in the thickness direction as shown in Fig. 2. The sheet portions 11a and 11b are configured as an integral sheet member folded back at one side on the lower end in Fig. 1.

As shown in Fig. 2, in the packaging container 10, the sheet portions 11a and 11b each have a laminated structure. The sheet portions 11a and 11b each have a first plastic sheet 21a disposed inside, a second plastic sheet 21b disposed outside, and a barrier sheet 22 disposed between a pair of the plastic sheets 21a and 21b.

Each of the plastic sheets 21a and 21b is formed as a base material having flexibility. As a resin material forming the plastic sheets 21a and 21b, polyethylene or polypropylene is preferably used. In addition to them, for example, other polyolefin-based resins, acrylic resins, vinyl chloride-based resins, polycarbonate-based resins, polystyrene-based resins, ethylene-vinyl alcohol copolymer-based resins, polyimide-based resins, and the like can be used.

From the viewpoint of recyclability, each of the plastic sheets 21a and 21b is preferably formed as a single-layer sheet formed of a single kind of resin material. Note that each of the plastic sheets 21a and 21b may be formed of a multilayer sheet containing a plurality of kinds of sheets formed of polyethylene, ethylene-vinyl alcohol copolymers, PET, polyamide, and the like on the basis of the requests for strength, bonding property, appearance, and the like other than the recyclability. Also in such a configuration, it is possible to enhance recyclability by forming a multilayer sheet by combining only sheets formed of resin materials having a common system (e.g., polyolefin-based, or polyester-based).

The barrier sheet 22 is a sheet member having gas barrier property capable of blocking water vapor, oxygen, and the like. The barrier sheet 22 is of a non-polymer type, which is formed of a material other than a polymer material (non-polymer material), and has flexibility by which it is flexibly deformable together with the plastic sheets 21a and 21b. As the barrier sheet 22, for example, a metal sheet formed of a metal material, a stone film, or the like can be used. As the metal material for forming the barrier sheet 22, aluminum or an alloy thereof is preferably used, and in addition thereto, for example, copper, titanium, or the like can be used. In the barrier sheet 22, it is preferable that the oxygen permeability is smaller than 1 cc/m²·day·atm and the water vapor permeability is smaller than 1 g/m²·day as a reference of the gas barrier property.

The thickness of each of the sheet portions 11a and 11b is preferably 25 µm or more and 1200 µm or less. The thickness of each of the plastic sheets 21a and 21b in the sheet portions 11a and 11b is preferably 10 µm or more and 500 µm or less, more preferably 10 µm or more and 200 µm or less, and most preferably 20 µm or more and 100 µm or less. The thickness of the barrier sheet 22 in each of the sheet portions 11a and 11b is preferably 5 µm or more and 200 µm or less, more preferably 6 µm or more and 100 µm or less, and most preferably 6 µm or more and 60 µm or less.

The packaging container 10 includes a barrier region B and an extending region E. As shown in Fig. 1, the barrier region B occupies most of the packaging container 10 including the central portion thereof. The extending region E is located outside the barrier region B and extends in an inverted U-shape along three sides of the packaging container 10 where the sheet portions 11a and 11b are not continuous. In the barrier region B, the barrier sheet 22 is disposed in each of the sheet portions 11a and 11b, that is, the plastic sheets 21a and 21b and the barrier sheet 22 overlap with each other. The extending region E includes the plastic sheets 21a and 21b of the sheet portions 11a and 11b extending outward from the barrier region B.

In the sheet portions 11a and 11b, a fixing region G is provided, in which the plastic sheets 21a and 21b are fixed to each other over the entire circumference of the barrier sheet 22. Thus, the barrier sheet 22 is sealed between the plastic sheets 21a and 21b inside of the fixing region G over the sheet portions 11a and 11b. In the packaging container 10, it is preferable that the peel strength between the plastic sheets 21a and 21b in the fixing region G is 2 N/15 mm or more. In this respect, in the fixing region G having the configuration shown in Figs. 1 to 3, a high peel strength between the plastic sheets 21a and 21b is easily obtained by joining the resins in the extending region E.

Note that the peel strength according to this embodiment is measured by a T-peel strength test based on JIS K 6854-3. In the measurement of the peel strength, a test piece having a width of 15 mm is used, and the test speed is 100 mm/min. In this embodiment, an average value excluding the peak value in a plurality of measured values obtained by this measurement is defined as a peel strength. This method of measuring a peel strength is applied not only to the peel strength of the fixing region G, but also to the peel strength of an easily peelable region Bp, which will be described later.

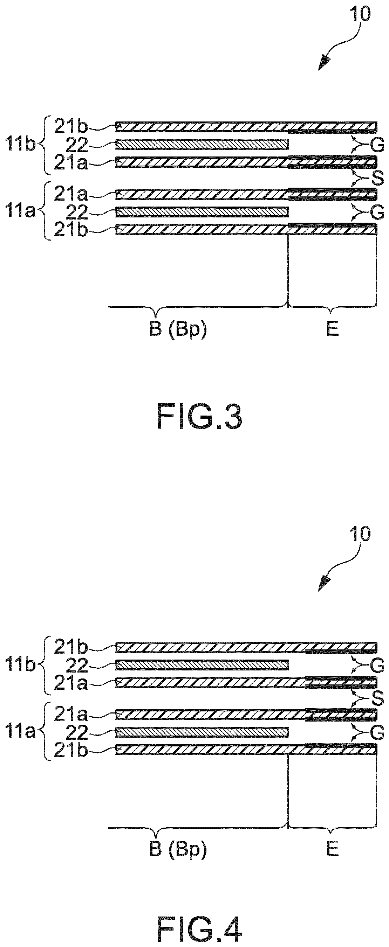

Further, the packaging container 10 includes a sealing region S in which the sheet portions 11a and 11b are sealed. The sealing region S extends continuously along the outer edge portion of the extending region E, and seals the sheet portions 11a and 11b along three sides of the outer shape of the packaging container 10. As a result, a storage portion V, which is a space closed over the entire circumference, is formed between the sheet portions 11a and 11b. Fig. 3 is an exploded view showing the vicinity of the fixing region G and the sealing region S in the packaging container 10. In Fig. 3, the range of the fixing region G in which the plastic sheets 21a and 21b are fixed and the range of the sealing region S in which the sheet portions 11a and 11b are fixed are indicated by thick lines. In the configuration shown in Figs. 1 to 3, the extending region E, the fixing region G, and the sealing region S coincide with each other. However, in the packaging container 10, at least one of the extended region E, the fixing region G, or the sealing region S may not coincide. For example, in the packaging container 10, as shown in Fig. 4, at least one of the fixing region G or the sealing region S may be provided to be smaller than the extending region E, that is, spaced apart from the barrier region B.

In the packaging container 10, an object to be packaged is stored in the storage portion V between the sheet portions 11a and 11b. The object that can be stored in the storage portion V of the packaging container 10 may be any of solid, liquid, and gas. Specifically, examples of such an object include a liquid soap, a shampoo, a detergent, a cosmetic, a bathwater additive, a food product, and a beverage. In the packaging container 10, since the storage portion V is isolated from an external environment by the barrier sheets 22 disposed in the barrier region B, it is possible to prevent the inflow and outflow of a water vapor and oxygen between the storage portion V and the external environment, and further it is possible to block electromagnetic waves such as ultraviolet rays and infrared rays from the external environment. As a result, in the packaging container 10, the quality of the object in the storage portion V can be maintained for a long period of time.

The barrier region B includes the easily peelable region Bp having a low peel strength, the peel strength being necessary for peeling off the plastic sheets 21a and 21b and the barrier sheet 22 from each other in each of the sheet portions 11a and 11b. In other words, in the packaging container 10, the peel strength between the plastic sheets 21a and 21b and the barrier sheet 22 in the easily peelable region Bp is smaller than the peel strength between the plastic sheets 21a and 21b in the fixing region G. More specifically, in the packaging container 10, the peel strength between the plastic sheets 21a and 21b and the barrier sheet 22 in the easily peelable region Bp is preferably less than 2 N/15 mm, and more preferably 1 N/15 mm or less.

In the configuration shown in Figs. 1 to 4, the plastic sheets 21a and 21b and the barrier sheet 22 are not fixed in the easily peelable region Bp. Thus, since the peel strength between the plastic sheets 21a and 21b and the barrier sheet 22 is substantially zero, the plastic sheets 21a and 21b and the barrier sheet 22 can be most easily separated from each other. Further, in the packaging container 10 having this configuration, since the barrier sheet 22 is not restrained by the plastic sheets 21a and 21b, a load is hardly applied to the barrier sheet 22 at the time of deformation or the like. Therefore, in the packaging container 10 having this configuration, since the barrier sheet 22 is hardly damaged, the appearance and the gas barrier property are easily maintained for a long period of time.

Further, the packaging container 10 according to this embodiment is not limited to the configurations shown in Figs. 1 to 4, and for example, the plastic sheets 21a and 21b and the barrier sheet 22 may be bonded to each other in a pseudo manner in the easily peelable region Bp. Note that the pseudo-bonding according to this embodiment means bonding by such a weak adhesion force that the peel strength between the plastic sheets 21a and 21b and the barrier sheet 22 remains within the above range. In the packaging container 10 in which the plastic sheets 21a and 21b and the barrier sheet 22 are bonded to each other in a pseudo manner, for example, it is possible to prevent the occurrence of wrinkles or shifts in the barrier sheet 22 between the plastic sheets 21a and 21b in the manufacturing process (e.g., the process of filling the storage portion V with an object), at the time of storage, at the time of transportation, or the like. As a result, in the packaging container 10, the appearance and the gas barrier property are hardly deteriorated by the deformation of the barrier sheet 22.

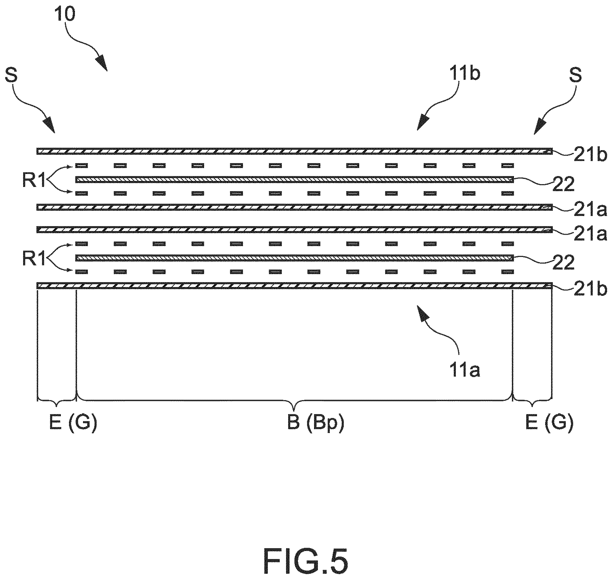

Fig. 5 shows an exploded example of the packaging container 10 having the configuration in which the plastic sheets 21a and 21b and the barrier sheet 22 are bonded to each other in a pseudo manner in the easily peelable region Bp. In the packaging container 10 shown in Fig. 5, the plastic sheets 21a and 21b and the barrier sheet 22 can be fixed by a weak adhesion force through partial bonding rather than entire surface bonding. More specifically, in the packaging container 10 shown in Fig. 5, the plastic sheets 21a and 21b and the barrier sheet 22 are fixed by pattern bonding via an adhesive R1 arranged in a predetermined pattern. The pattern of the adhesive R1 in the pattern bonding includes, for example, a lattice-like pattern or a plane-like pattern formed by dots, lines, or the like. Further, the pattern of the adhesive R1 may be a continuous pattern or a discontinuous pattern. Moreover, the pattern of the adhesive R1 may be a regular pattern or an irregular pattern.

Note that the pseudo-bonding of the plastic sheets 21a and 21b and the barrier sheet 22 in the easily peelable region Bp of the packaging container 10 only needs to have a configuration in which the plastic sheets 21a and 21b and the barrier sheet 22 can be easily peeled off from each other, and is not limited to the above configuration. For example, in the easily peelable region Bp of the packaging container 10, use of an adhesive having a weak adhesion force also makes it possible to bond the plastic sheets 21a and 21b and the barrier sheet 22 over the entire surfaces thereof. Further, the pseudo-bonding of the plastic sheets 21a and 21b and the barrier sheet 22 in the easily peelable region Bp of the packaging container 10 is not limited to a technique using an adhesive, and other different-material bonding techniques may be used. Examples of the different-material bonding techniques available for the pseudo-bonding include various welding methods such as electric resistance welding, high-frequency induction heating, ultrasonic welding, and hot plate welding, and laser joining methods. Also in such cases, the plastic sheets 21a and 21b and the barrier sheet 22 can be fixed by pattern bonding in a similar pattern as that described above. Further, use of such a condition that the peel strength has a weak adhesion force so as to remain within the above range also makes it possible to bond the plastic sheets 21a and 21b and the barrier sheet 22 over the entire surfaces thereof.

### [Recycling Method for Packaging Container 10]

As described above, in the packaging container 10, high gas barrier property is obtained by using the barrier sheet 22. In contrast, in a general packaging container, the plastic sheet and the barrier sheet are firmly fixed by an adhesive or a laminate such as a coextrusion over the entire regions of the plastic sheet and the barrier sheet, and thus it has been difficult to separately reuse the plastic sheet and the barrier sheet.

In contrast, in the packaging container 10 according to this embodiment, providing the easily peelable region Bp makes it possible to easily separate and recover the plastic sheets 21a and 21b and the barrier sheet 22, so that high recyclability is obtained. In other words, in the packaging container 10 according to this embodiment, both high gas barrier property and high recyclability can be achieved. Hereinafter, a recycling method for the packaging container 10 according to this embodiment will be described. Note that, in the packaging container 10 to be recycled, it is generally assumed that at least a part of the sealing region S is peeled off when the packaging container 10 is opened. However, in the following, description will be given on the assumption that all of the sealing region S of the packaging container 10 remains without being peeled off, for convenience of description.

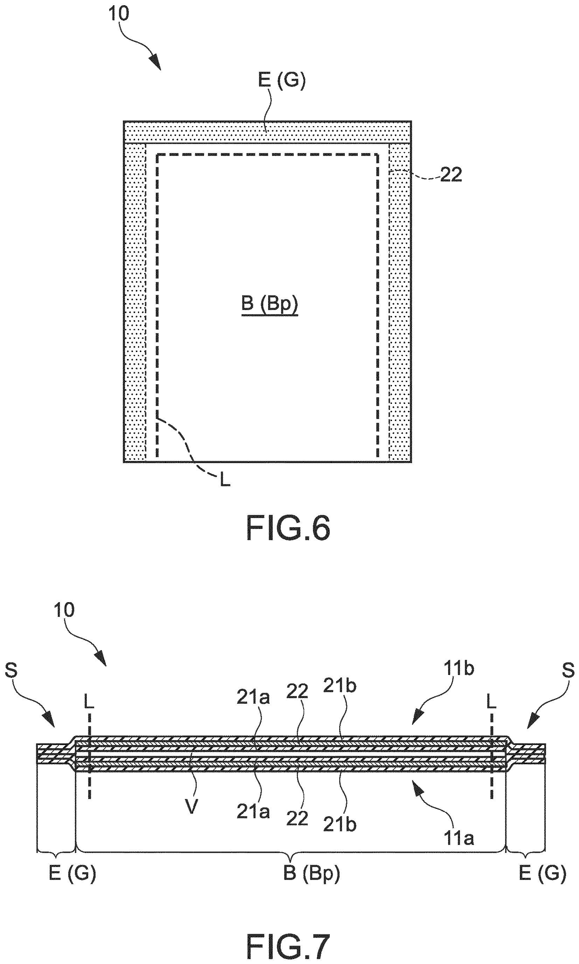

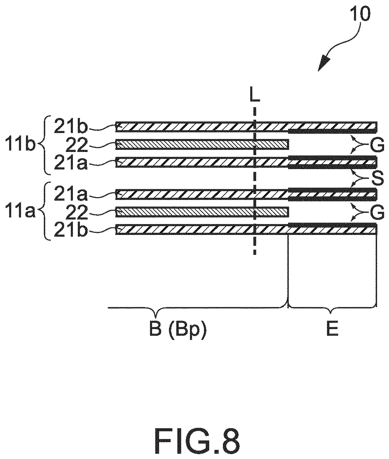

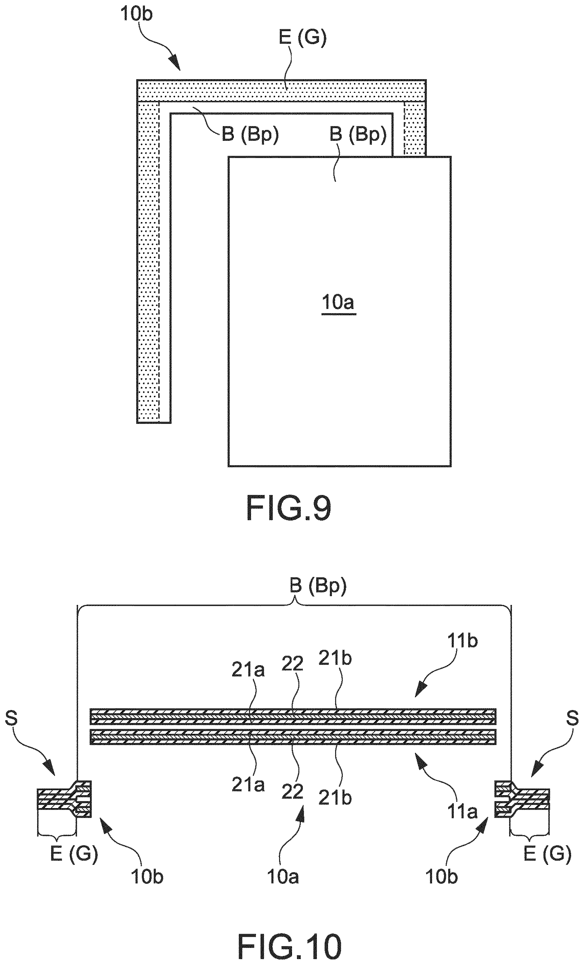

In the recycling method for the packaging container 10 according to this embodiment, at least a part of the easily peelable region Bp is first cut away from the packaging container 10 to be recycled. Figs. 6 to 8 show an example of a cutting line L used at the time of cutting the easily peelable region Bp and the sealing region S away from each other. The cutting line L extends along the slightly inner side of the boundary between the barrier region B and the extending region E, that is, extends in an inverted U-shape along the outer edge portion of the easily peelable region Bp. When the packaging container 10 is cut along the cutting line L, as shown in Figs. 9 and 10, the packaging container 10 is divided into a first portion 10a including only the easily peelable region Bp and a second portion 10b including the fixing region G and the outer edge portion of the easily peelable region Bp. In other words, in the packaging container 10 in this state, the fixing region G in which the plastic sheets 21a and 21b are firmly fixed to each other is included only in the second portion 10b and is not included in the first portion 10a.

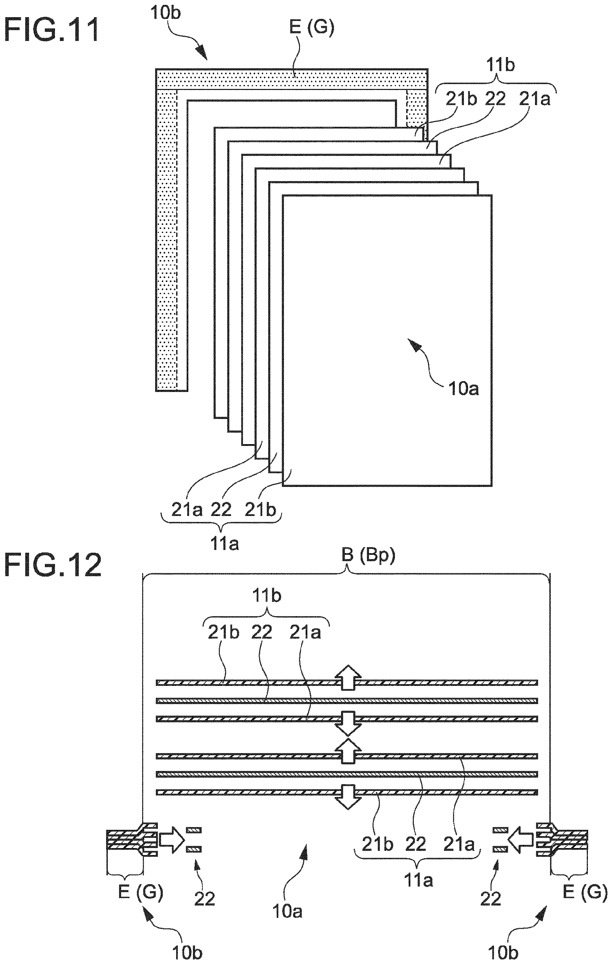

As described above, in the easily peelable region Bp, the peel strength between the plastic sheets 21a and 21b and the barrier sheet 22 is low in each of the sheet portions 11a and 11b. Thus, in the first portion 10a, as shown in Figs. 11 and 12, the barrier sheet 22 can be easily peeled off from the plastic sheets 21a and 21b. Further, in the second portion 10b, as shown in Fig. 12, the barrier sheet 22 can be easily taken out from the plastic sheets 21a and 21b. As described above, in the packaging container 10, the plastic sheets 21a and 21b and the barrier sheet 22 can be completely separated and recovered. Thus, there is substantially no waste in the packaging container 10, and the plastic sheets 21a and 21b and the barrier sheet 22 can be recycled.

Note that the method of separating the plastic sheets 21a and 21b and the barrier sheet 22 in the recycling method for the packaging container 10 according to this embodiment is not limited to the configuration in which the first portion 10a and the second portion 10b are completely separated from each other as described above. For example, the easily peelable region Bp of the packaging container 10 may be linearly cut along both lateral edge portions thereof, and the barrier sheet 22 may be taken out from the plastic sheets 21a and 21b in a subsequent step. Further, as an object to be recycled in this embodiment, a used packaging container 10 is mainly assumed, but it may be an unused packaging container 10. The unused packaging container 10 is opened in advance to take out an object stored in the storage portion V, and thus it can be recycled in the similar manner as that above.

### [Manufacturing Method for Packaging Container 10]

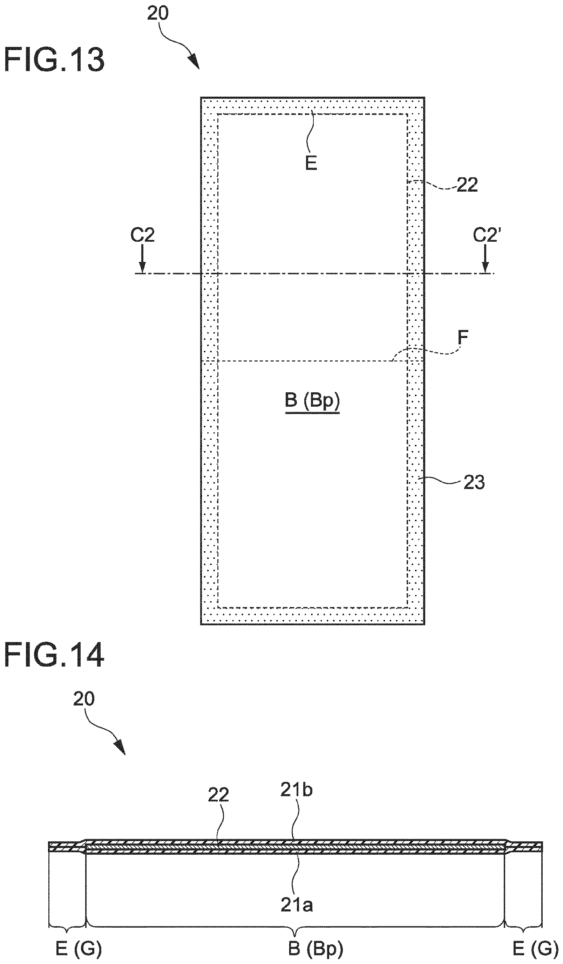

A laminated sheet 20 shown in Figs. 13 to 15 can be used for manufacturing the packaging container 10. The planar shape of the laminated sheet 20 shown in Figs. 13 to 15 is a rectangular shape in accordance with the planar shape of the packaging container 10. In the packaging container 10, the sheet portions 11a and 11b are formed of the laminated sheet 20. Therefore, the laminated sheet 20 has a laminated structure in which the barrier sheet 22 is disposed between the plastic sheets 21a and 21b, similarly to the sheet portions 11a and 11b. The laminated sheet 20 includes a barrier region B (easily peelable region Bp) corresponding to the sheet portions 11a and 11b and an extending region E extending along the circumference of the barrier region B. In the packaging container 10 according to this embodiment, at least a part of the barrier region B of the laminated sheet 20 is maintained at a low peel strength in the manufacturing process, thus obtaining the easily peelable region Bp of the packaging container 10.

The laminated structure of the laminated sheet 20 can be formed, for example, under a reduced-pressure atmosphere at a pressure lower than an atmospheric pressure. As a result, in the laminated sheet 20, the plastic sheets 21a and 21b and the barrier sheet 22 can satisfactorily come into close contact with each other without interposing air bubbles or the like in the easily peelable region Bp. The laminated structure of the laminated sheet 20 can be formed by, for example, supplying each of the plastic sheets 21a and 21b and barrier sheet 22 as a continuous sheet. Further, only the barrier sheet 22 may be supplied as a sheet, or each of the plastic sheets 21a and 21b and the barrier sheet 22 may be supplied as a sheet.

Further, in order to improve the adhesiveness between the plastic sheets 21a and 21b and the barrier sheet 22 in the laminated sheet 20, a mechanical pressing force in the thickness direction may be applied to the laminated structure including the plastic sheet 21a and 21b and the barrier sheet 22. For example, the laminated structure of the laminated sheet 20 is sandwiched between rotating rolls to expel gas, whereby high adhesiveness between the plastic sheets 21a and 21b and the barrier sheet 22 can be obtained. Further, taper processing or the like is performed on a pressing surface, which applies a pressing force to the laminated structure, whereby the plastic sheets 21a and 21b and the barrier sheet 22 can be bonded to each other in a pseudo manner at the same time as the gas is expelled. Furthermore, when a pressing force is applied to the laminated structure, the laminated structure may be heated. In this configuration, since the followingness of the plastic sheets 21a and 21b softened by heating with respect to the barrier sheet 22 is improved, it is possible to allow gas to escape favorably.

The fixing region G in which the plastic sheets 21a and 21b are directly fixed to each other is formed in the extending region E of the laminated sheet 20. The fixing region G is provided in the extending region E so as to surround the entire circumference of the easily peelable region Bp, and seals the plastic sheets 21a and 21b. As a result, the barrier sheet 22 is hermetically sealed between the plastic sheets 21a and 21b, and its movement between the plastic sheets 21a and 21b is restricted. Thus, in the laminated sheet 20, a stable laminated structure is favorably maintained.

In the manufacturing process of the laminated sheet 20, the fixing region G is formed in a state in which the barrier sheet 22 is sandwiched between the plastic sheets 21a and 21b. At that time, for example, the plastic sheets 21a and 21b and the barrier sheet 22 are not directly fixed to each other, so that the easily peelable region Bp having a low peel strength can be obtained. The fixing region G of the laminated sheet 20 can be formed by, for example, performing thermal fusion on the plastic sheets 21a and 21b by heat sealing. Thus, the fixing region G can be easily formed in a short time. Note that the method of forming the fixing region G is not limited to heat sealing, and may be ultrasonic welding, for example, or may be a method using a fixing material such as an adhesive. In the laminated sheet 20, it is preferable that the peel strength between the plastic sheets 21a and 21b in the fixing region G is 2 N/15 mm or more.

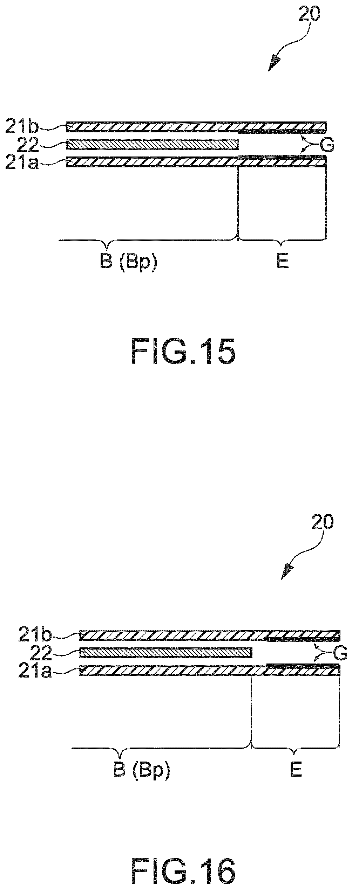

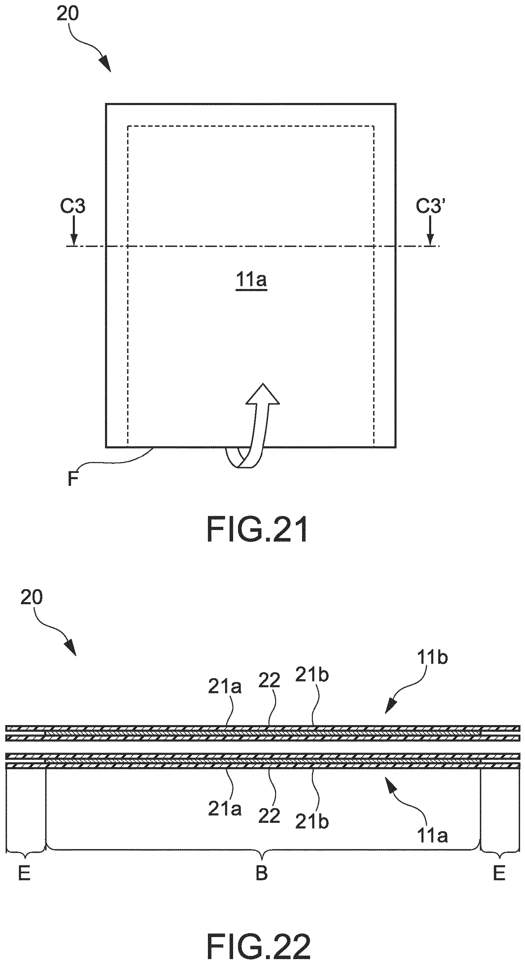

Note that in the laminated sheet 20 shown in Figs. 13 to 15 the extending region E and the fixing region G coincide with each other. However, in the laminated sheet 20, the extending region E and the fixing region G may not coincide with each other. For example, in the laminated sheet 20, as shown in Fig. 16, the fixing region G may be provided to be smaller than the extending region E, that is, spaced apart from the barrier region B. Further, in the laminated sheet 20, the fixing region G may not be provided on the entire circumference of the easily peelable region Bp. In other words, in the laminated sheet 20, only a part of the circumference of the easily peelable region Bp may be fixed in the fixing region G. For example, the fixing region G may be provided along two sides facing each other in the horizontal direction or the vertical direction. Further, the laminated sheet 20 may have a configuration in which the fixing region G is not provided (see Figs. 21 and 22 to be described later).

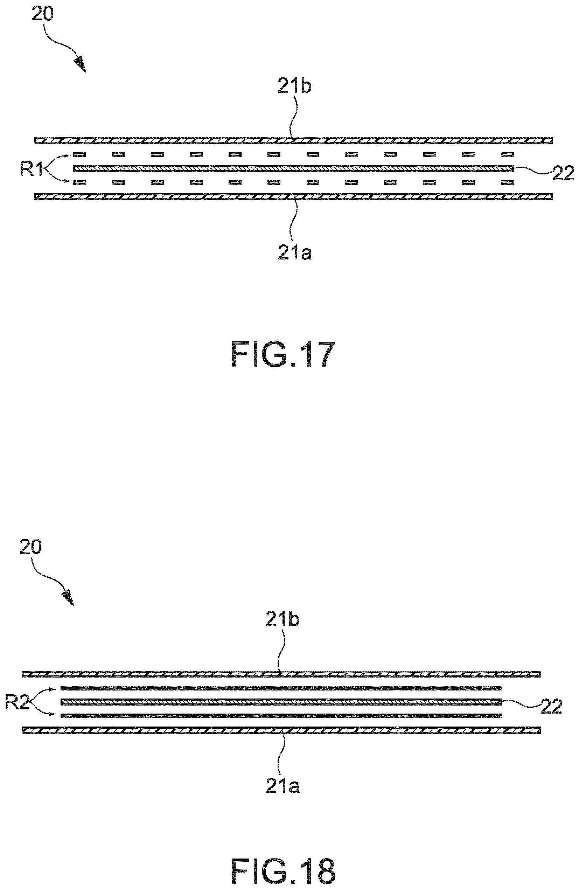

Further, as described above, in order to obtain the configuration in which the plastic sheets 21a and 21b and the barrier sheet 22 are bonded to each other in a pseudo manner in the easily peelable region Bp of the packaging container 10, it is preferable that the plastic sheets 21a and 21b and the barrier sheet 22 are bonded to each other in a pseudo manner at the stage of the laminated sheet 20. For example, in the laminated sheet 20, as shown in Fig. 17, the plastic sheets 21a and 21b and the barrier sheet 22 can be fixed to each other by pattern bonding via the adhesive R1 so as to correspond to the packaging container 10 shown in Fig. 5. The adhesive R1 can be provided between each of the plastic sheets 21a and 21b and the barrier sheet 22. Note that any of the different-material bonding techniques described above may be used for the pseudo-bonding of the plastic sheets 21a and 21b and the barrier sheet 22.

Furthermore, as shown in Fig. 18, the laminated sheet 20 may include easily peelable layers R2 for reducing the peel strength between the plastic sheets 21a and 21b and the barrier sheet 22 if necessary. The easily peelable layer R2 can be provided between each of the plastic sheets 21a and 21b and the barrier sheet 22. The easily peelable layer R2 can be formed by, for example, being applied to at least one of the plastic sheet 21a, 21b or the barrier sheet 22. For example, a silicone-based release agent, a fluorine-based release agent, a wax, a surfactant, or the like can be used as the easily peelable layer R2. Further, in addition to the above, for example, a material having high bonding property with respect to the plastic sheets 21a and 21b and low bonding property with respect to the barrier sheet 22 can be used as the easily peelable layer R2. In the laminated sheet 20 using such an easily peelable layer R2, the easily peelable layer R2 and the barrier sheet 22 can be easily peeled off from each other.

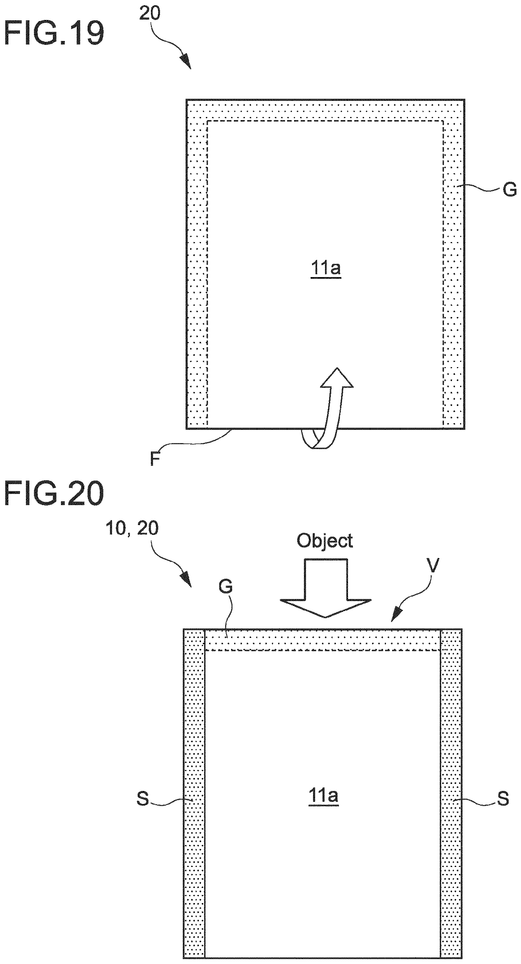

Hereinafter, a manufacturing example of the packaging container 10 using the laminated sheet 20 shown in Figs. 13 to 15 will be described. Fig. 13 shows a folding line F of the laminated sheet 20. As shown in Fig. 19, the laminated sheet 20 is folded back at the folding line F to be doubled. Thus, in the laminated sheet 20 shown in Fig. 19, the lower portion from the folding line F in Fig. 13 becomes the first sheet portion 11a, and the upper portion from the folding line F in Fig. 13 becomes the second sheet portion 11b. Then, as shown in Fig. 20, the sealing regions S are formed along the two right and left sides of the sheet portions 11a and 11b. The sealing regions S can be formed to overlap with the fixing regions G of the sheet portions 11a and 11b. Note that the positional relationship between the sealing regions S and the fixing regions G of the sheet portions 11a and 11b can be changed in various ways.

The laminated sheet 20 shown in Fig. 20 constitutes the packaging container 10 including the storage portion V, which is closed on the lateral sides by the sealing regions S between the sheet portions 11a and 11b and which is opened only on the upper side. Therefore, in the state shown in Fig. 20, an object to be packaged can be put in the storage portion V from above in the packaging container 10. Then, from the state shown in Fig. 20, the sealing region S is formed along the upper side of the sheet portions 11a and 11b in the similar manner as described above, and thus the storage portion V of the packaging container 10 that is storing the object is airtightly sealed by the continuous, inverted U-shaped sealing region S. Thus, the packaging container 10 according to this embodiment shown in Figs. 1 to 3 is completed.

Each sealing region S in the packaging container 10 can be formed by, for example, performing thermal fusion on the sheet portions 11a and 11b by heat sealing. Thus, the sealing region S can be easily formed in a short time. Note that the method of forming the sealing region S is not limited to heat sealing. For example, a sealing member such as an adhesive may be used to form the sealing regions S along the two right and left sides of the sheet portions 11a and 11b. Further, in addition to the direct sealing method, various methods for sealing the storage portion V can be used for forming the sealing region S along the upper side of the sheet portions 11a and 11b. For example, a method using a discharge mechanism including a spout, a pump, a film valve, or the like can be used.

Note that in the manufacture of the packaging container 10, as shown in Figs. 21 and 22, it is also possible to use a laminated sheet 20 in which the fixing region G for fixing the plastic sheets 21a and 21b is not provided. In this case, the fixing region G for fixing the plastic sheets 21a and 21b can be formed at the same time as the sealing region S. In other words, for example, the thermal fusion of the plastic sheets 21a and 21b and the thermal fusion of the sheet portions 11a and 11b are performed at the same time in one heat sealing, so that it is possible to form the sealing region S and the fixing region G at the same time. Thus, it is possible to omit the step of independently providing the fixing region G in the laminated sheet 20, and thus it is possible to reduce the manufacturing cost of the packaging container 10.

### [Other Configuration Examples of Packaging Container 10]

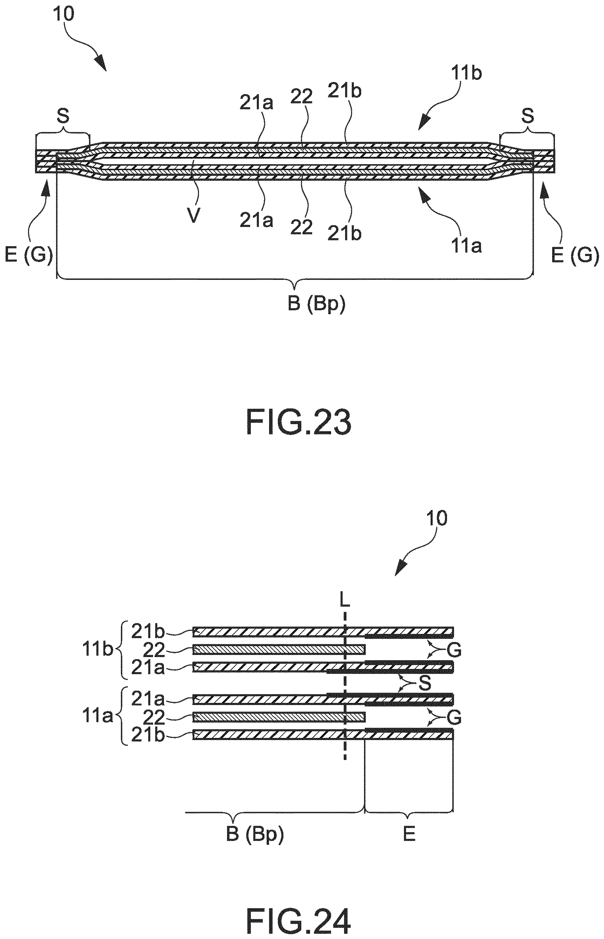

In the packaging container 10 according to this embodiment, as shown in Figs. 23 and 24, the barrier sheet 22 may enter the sealing region S in each of the sheet portions 11a and 11b. In other words, in this configuration, the sealing region S extends from the extending region E (fixing region G) to the outer edge portion of the barrier region B. In the packaging container 10 having such a configuration, the continuity of the barrier sheet 22 can be ensured in the circumference of the storage portion V between the sheet portions 11a and 11b, and thus higher gas barrier property can be obtained. Fig. 24 shows a cutting line L used at the time of recycling the packaging container 10 having this configuration. The cutting line L shown in Fig. 24 passes through the outer edge portion of the barrier region B overlapping with the sealing region S. Note that the position of the cutting line L may be inside of the fixing region G or inside of the sealing region S in the easily peelable region Bp.

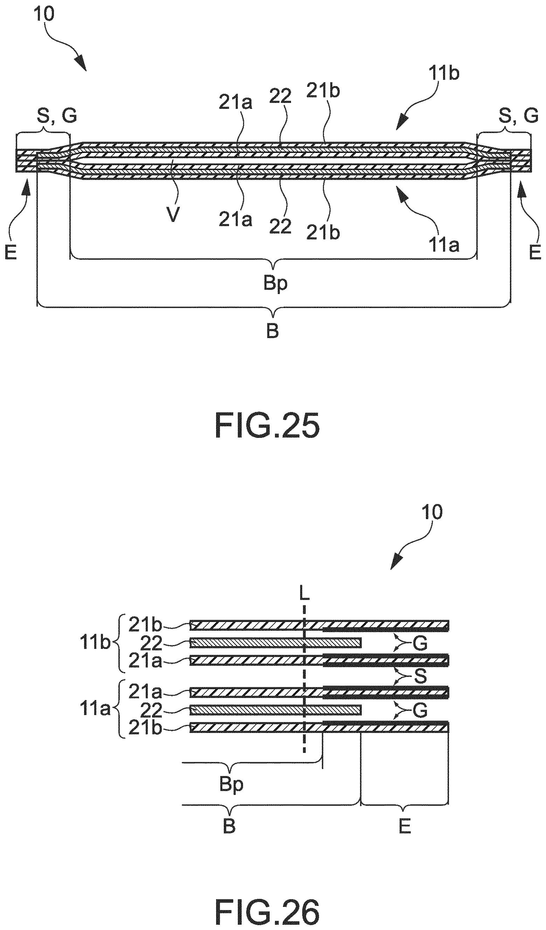

Further, in the packaging container 10 according to this embodiment, as shown in Figs. 25 and 26, not only the sealing region S but also the fixing region G may overlap with the outer edge portion of the barrier region B. In other words, the plastic sheets 21a and 21b are fixed to each other via the barrier sheet 22 at the outer edge portion of the barrier region B overlapping with the fixing region G. Also in this case, the configuration in which a part of the fixing region G overlaps with the extending region E makes it easier to obtain a high adhesion force between the plastic sheets 21a and 21b by joining the resins in the fixing region G. Fig. 26 shows a cutting line L used at the time of recycling the packaging container 10 having this configuration. The cutting line L shown in Fig. 26 passes through a region inside of the sealing region S and the fixing region G in the barrier region B. In the packaging container 10 having this configuration, it is not easy to separate the plastic sheets 21a and 21b and the barrier sheet 22 firmly fixed at the outer edge portion overlapping with the fixing region G in the barrier region B. However, even in such a configuration, the plastic sheets 21a and 21b and the barrier sheet 22 can be easily separated from each other in the easily peelable region Bp occupying most of the barrier region B, so that high recyclability can be obtained.

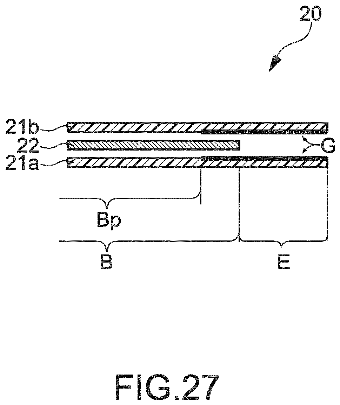

For example, as shown in Fig. 27, the laminated sheet 20 in which the fixing region G overlaps with the outer edge portion of the barrier region B can be used for manufacturing the packaging container 10 having the configuration shown in Figs. 25 and 26. The laminated sheet 20 having such a configuration can be manufactured by, for example, performing heat sealing for forming the fixing region G under the condition that the plastic sheets 21a and 21b are to be bonded to the barrier sheet 22. Note that manufacturing the packaging container 10 having the configuration shown in Figs. 25 and 26 is not limited to use the laminated sheet 20 having the configuration shown in Fig. 27, and for example, the laminated sheet 20 having any configuration shown in Figs. 13 to 22 can be used. In this case, for example, heat sealing for forming the sealing region S is performed under the condition that the plastic sheets 21a and 21b are to be bonded to the barrier sheet 22 in each of the sheet portions 11a and 11b, whereby the packaging container 10 having the configuration shown in Figs. 25 and 26 is obtained.

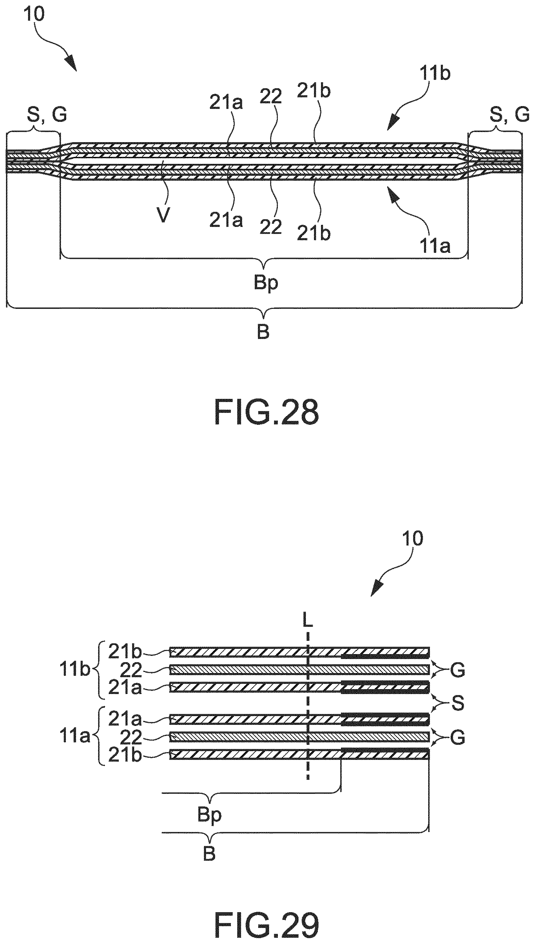

Further, as shown in Figs. 28 and 29, the packaging container 10 may have a configuration in which the barrier sheet 22 is disposed over the entire region of each of the sheet portions 11a and 11b, that is, only the barrier region B including no extending region E is provided. In this packaging container 10, the gas barrier property by the barrier sheet 22 is most effectively obtained. In this case, in the fixing region G of each of the sheet portions 11a and 11b, for example, the plastic sheets 21a and 21b and the barrier sheet 22 are fixed to each other via a fixing material such as an adhesive, whereby a high peel strength between the plastic sheets 21a and 21b is obtained. In the fixing region G having this configuration, it is preferable that the peel strength between the plastic sheets 21a and 21b, which is measured with the barrier sheet 22 being interposed therebetween, is 2 N/15 mm or more. Fig. 29 shows a cutting line L used at the time of recycling the packaging container 10 of this configuration. The cutting line L shown in Fig. 29 passes through a region inside of the sealing region S and the fixing region G in the barrier region B. In the packaging container 10 having this configuration, it is not easy to separate the plastic sheets 21a and 21b and the barrier sheet 22 firmly fixed in the fixing region G. However, even in such a configuration, the plastic sheets 21a and 21b and the barrier sheet 22 can be easily separated from each other in the easily peelable region Bp occupying most of the barrier region B, so that high recyclability can be obtained.

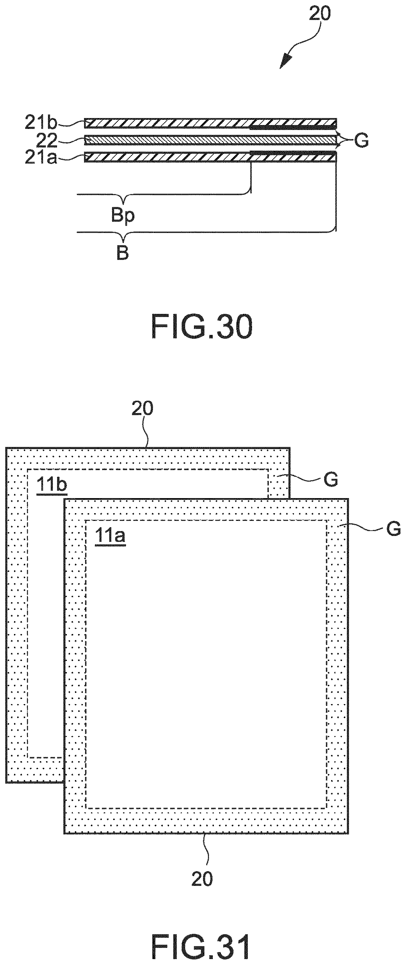

For example, as shown in Fig. 30, the laminated sheet 20 in which the barrier sheet 22 extends over the entire region between the plastic sheets 21a and 21b can be used for manufacturing the packaging container 10 having the configuration shown in Figs. 28 and 29. In the laminated sheet 20 having such a configuration, the plastic sheets 21a and 21b and the barrier sheet 22 may be bonded to each other by, for example, heat sealing under the condition that the plastic sheets 21a and 21b are to be bonded to the barrier sheet 22, in addition to bonding via an adhesive or the like. Note that in the manufacture of the packaging container 10 having the configuration shown in Figs. 28 and 29, the laminated sheet 20 in which the fixing region G is not formed can also be used. In this case, for example, heat sealing for forming the sealing region S is performed under the condition that the plastic sheets 21a and 21b are to be bonded to the barrier sheet 22 in each of the sheet portions 11a and 11b, whereby the fixing region G can be formed simultaneously with the sealing region S.

### [Other Embodiments]

Hereinabove, each embodiment of the present invention has been described, but the present invention is not limited to the embodiment described above and can be variously modified as a matter of course without departing from the gist of the present invention.

For example, the sheet portions 11a and 11b of the packaging container 10 of the present invention may not have a configuration in which the continuous laminated sheet 20 is folded back at the folding line F. In other words, as shown in Fig. 31, the packaging container 10 may be manufactured by forming the first sheet portion 11a and the second sheet portion 11b using separate laminated sheets 20 and attaching the two laminated sheets 20 to each other. In the packaging container 10 having this configuration, the storage portion V between the sheet portions 11a and 11b can be airtightly sealed by providing the sealing region S over the entire circumference along the four sides of the sheet portions 11a and 11b. In the packaging container 10 having this configuration, the material, the thickness, and the like of the plastic sheets 21a and 21b and the barrier sheet 22 may be different from each other in the sheet portions 11a and 11b.

Further, the pair of plastic sheets 21a and 21b used for the laminated sheet 20 need not necessarily be the same and may be different from each other. For example, the plastic sheets 21a and 21b may be formed of different kinds or systems of resin materials from each other or may have different thicknesses from each other.

Furthermore, the planar shape of the packaging container 10 of the present invention does not have to be a rectangular shape, and a shape generally used as a packaging body can be optionally applied in accordance with the shape, properties, and the like of an object to be stored in the storage portion V. As an example, the planar shape of the packaging container 10 may be one of or a combination of two or more of the rectangular, polygonal, round, elliptical, and trapezoidal shapes. In the packaging container 10, it is preferable that the sealing regions S are provided at least at two positions along the contour even in any planar shape. Further, the planar shape of the laminated sheet 20 used for manufacturing the packaging container 10 does not need to be a rectangular shape and can be optionally determined in accordance with the planar shape required for the packaging container 10. As an example, the planar shape of the laminated sheet 20 may be one of or a combination of two or more of the rectangular, polygonal, round, elliptical, and trapezoidal shapes. In the laminated sheet 20, it is preferable that the fixing regions G are provided at least at two positions along the contour even in any planar shape.

In addition, the packaging container 10 of the present invention can also have a configuration in which a plurality of storage portions V whose circumference is airtightly sealed by the sealing region S are arranged side by side in the in-plane direction. Further, the configuration of the packaging container 10 of the present invention can be applied to containers of various shapes, and is not limited to the planar, pillow-type container described above. For example, it can also be applied to a container having a three-dimensional shape, such as a standing pouch provided with a collapsible gusset at the bottom.

### Reference Signs List

- 10: packaging container
- 11a, 11b: sheet portion
- 20: laminated sheet
- 21a, 21b: plastic sheet
- 22: barrier sheet
- B: barrier region
- Bp: easily peelable region
- E: extending region
- G: fixing region
- S: sealing region
- V: storage portion

## Claims

1. A laminated sheet for manufacturing a packaging container, comprising:
a pair of plastic sheets;
a barrier sheet having flexibility and disposed between the pair of plastic sheets;
a barrier region in which the pair of plastic sheets and the barrier sheet overlap with each other;
an easily peelable region provided in the barrier region; and
a fixing region that is located in a circumference of the easily peelable region and in which the pair of plastic sheets are fixed to each other directly and/or via the barrier sheet, wherein
a peel strength between the pair of plastic sheets and the barrier sheet in the easily peelable region is smaller than a direct peel strength between the pair of plastic sheets and/or a peel strength between the pair of plastic sheets via the barrier sheet in the fixing region.

2. The laminated sheet according to claim 1, wherein
the peel strength between the pair of plastic sheets and the barrier sheet in the easily peelable region is less than 2 N/15 mm.

3. The laminated sheet according to claim 2, wherein
the peel strength between the pair of plastic sheets and the barrier sheet in the easily peelable region is 1 N/15 mm or less.

4. The laminated sheet according to any one of claims 1 to 3, wherein
the direct peel strength between the pair of plastic sheets and/or the peel strength between the pair of plastic sheets via the barrier sheet in the fixing region is 2 N/15 mm or more.

5. The laminated sheet according to any one of claims 1 to 4, wherein
the pair of plastic sheets and the barrier sheet are bonded to each other in a pseudo manner in the easily peelable region.

6. The laminated sheet according to any one of claims 1 to 5, further comprising
an extending region that is formed of the pair of plastic sheets extending outside of the barrier region, wherein
at least a part of the fixing region overlaps with the extending region.

7. The laminated sheet according to any one of claims 1 to 6, wherein
the fixing region is formed by heat sealing.

8. The laminated sheet according to any one of claims 1 to 7, wherein
the barrier sheet is formed of a metal material.

9. The laminated sheet according to claim 8, wherein
the barrier sheet is formed of aluminum.

10. The laminated sheet according to any one of claims 1 to 9, wherein
the barrier sheet has a thickness of 200 µm or less.

11. The laminated sheet according to any one of claims 1 to 10, wherein
the pair of plastic sheets are formed of polyethylene or polypropylene.

12. The laminated sheet according to any one of claims 1 to 11, wherein
each of the pair of plastic sheets has a thickness of 200 µm or less.

13. The laminated sheet according to any one of claims 1 to 12, wherein
the laminated sheet has a planar shape that is one of or a combination of two or more of a rectangular shape, a polygonal shape, a round shape, an elliptical shape, and a trapezoidal shape.

14. The laminated sheet according to claim 13, wherein
the fixing regions are provided at least at two positions along a contour of the packaging container.

15. A manufacturing method for the laminated sheet according to any one of claims 1 to 14, comprising
forming a laminated structure including the pair of plastic sheets and the barrier sheet under a reduced-pressure atmosphere.

16. A manufacturing method for the laminated sheet according to any one of claims 1 to 14, comprising
applying a pressing force to a laminated structure including the pair of plastic sheets and the barrier sheet in a thickness direction.

17. A packaging container, which is formed of a laminated sheet in which a barrier sheet having flexibility is disposed between a pair of plastic sheets, the packaging container comprising:
a barrier region in which the pair of plastic sheets and the barrier sheet overlap with each other;
an easily peelable region provided in the barrier region;
a fixing region that is located in a circumference of the easily peelable region and in which the pair of plastic sheets are fixed to each other directly and/or via the barrier sheet;
a sealing region in which the first sheet portion and the second sheet portion are sealed; and
a storage portion configured to be capable of storing an object between the first sheet portion and the second sheet portion inside of the sealing region, wherein
a peel strength between the pair of plastic sheets and the barrier sheet in the easily peelable region is smaller than a direct peel strength between the pair of plastic sheets and/or a peel strength between the pair of plastic sheets via the barrier sheet in the fixing region.

18. The packaging container according to claim 17, wherein
the peel strength between the pair of plastic sheets and the barrier sheet in the easily peelable region is less than 2 N/15 mm.

19. The packaging container according to claim 18, wherein
the peel strength between the pair of plastic sheets and the barrier sheet in the easily peelable region is 1 N/15 mm or less.

20. The packaging container according to any one of claims 17 to 19, wherein
the direct peel strength between the pair of plastic sheets and/or the peel strength between the pair of plastic sheets via the barrier sheet in the fixing region is 2 N/15 mm or more.

21. The packaging container according to any one of claims 17 to 20, wherein
the storage portion is located in the easily peelable region.

22. The packaging container according to any one of claims 17 to 21, wherein
at least a part of the sealing region overlaps with the barrier region.

23. The packaging container according to any one of claims 17 to 22, wherein
the fixing region is formed by heat sealing.

24. The packaging container according to any one of claims 17 to 23, wherein
the packaging container has a planar shape that is one of or a combination of two or more of a rectangular shape, a polygonal shape, a round shape, an elliptical shape, and a trapezoidal shape.

25. The packaging container according to claim 24, wherein
the sealing regions are provided at least at two positions along a contour of the packaging container.

26. A manufacturing method for the packaging container according to any one of claims 17 to 25, comprising
forming the fixing region before forming the sealing region.

27. A manufacturing method for the packaging container according to any one of claims 17 to 25, comprising
forming the fixing region simultaneously with the sealing region.

28. A recycling method for the packaging container according to any one of claims 17 to 25, comprising
separating the pair of plastic sheets and the barrier sheet from each other in the easily peelable region after cutting at least a part of the easily peelable region away from the packaging container.
